# EUROPEAN PATENT APPLICATION

(11) **EP 4 613 545 A1**
(43) Date of publication of application: **10.09.2025**
(21) Application number: 25162133.0
(22) Date of filing: 06.03.2025
(51) Int. Cl.: B60L 53/60, B60L 53/30, B60L 3/00

(54) **ELECTRIC VEHICLE CHARGING INFRASTRUCTURE AND METHOD FOR CHARGING AN ELECTRIC VEHICLE**

(30) Priority: 06.03.2024 EP 24161713
(71) Applicant: ABB E-mobility B.V., 2629 JG Delft (NL)
(72) Inventor: ALARCON, Daniel, 28043 Madrid (ES); NOTTEHED, Hans, 16859 Bromma (SE)
(74) Representative: Zimmermann & Partner Patentanwälte mbB

(57) **Abstract**

An electric vehicle charging infrastructure (100) is provided. The electric vehicle charging infrastructure includes an electric vehicle supply equipment, EVSE, (12) for charging an electric vehicle, EV, and a policy configurator (10). The EVSE (12) includes a human-machine interface, HMI (14), for interacting with a user, a payment subsystem for processing payments (16), a charging subsystem (18) for charging the EV, and a master event processor (19). The policy configurator is adapted for configuring a policy set and for sending the policy set to the master event processor. The master event processor is adapted for receiving event data from the HMI, and the payment subsystem, and in response to the received event data, controlling operation of the HMI, and of the payment subsystem according to a workflow based on the policy set. The event data include at least one non-critical anomaly event, and the workflow specifies a respective action for enabling a charging operation in response to the at least one non-critical anomaly event.

## Description

Aspects of the invention generally relate to an electric vehicle charging infrastructure, in particular to an electric vehicle charging infrastructure allowing the flexible adaptation of workflows. Further aspects relate to a corresponding method for charging an electric vehicle.

### TECHNICAL BACKGROUND

Efforts have been made to standardize and ensure interoperability between Electric Vehicle Charging Equipment (EVSE) and Electric Vehicles (EVs) for EV charging, in particular open standards for electric vehicle charging infrastructure, such as, for instance the Open Charge Point Protocol (OCPP). Still, the interoperability remains imperfect. These efforts are further complicated by the large number of possible combinations and scenarios, and by the fragmented landscape of electric vehicle charging infrastructure where components and/or services are provided by various companies. Each company may define their own backend-parameters even within a given standard. This can lead to unforeseen combability issues. For such reasons, attempts to charge an electric vehicle may be cancelled without charging success.

Another factor contributing to the above issues is the interaction of the electric vehicle charging infrastructure with a user. The electric vehicle charging infrastructure might provide for a static workflow, expecting a fixed sequence of user actions, while a user might behave more intuitively or like he is accustomed to from another charging infrastructure from a different provider. This might lead to a mismatch between expected and actual user action.

One way to reduce the above issues is testing. Indeed, testing of electric vehicle charging infrastructure can reduce the number of the above issues. But not all scenarios can be tested reliably in advance, so that there may remain scenarios resulting in unwanted cancellation of charging attempts despite operation equipment of an electric vehicle charging infrastructure. Thus, there is still room to further improve the charging success rate of the charging infrastructure.

### SUMMARY OF THE INVENTION

In view of the above, the invention as set out in the appended set of claims is provided. Specific embodiments are provided in the following description and the accompanying figures. Technical terms are used in their common sense. If a specific meaning is conveyed to certain terms, definitions of terms will be given in the following in the context of which the terms are used.

According to an aspect, an electric vehicle charging infrastructure is provided. The electric vehicle charging infrastructure includes an electric vehicle supply equipment (EVSE) for charging an electric vehicle (EV) and a policy configurator. The EVSE includes a human-machine interface (HMI) for interacting with a user, a payment subsystem for processing payments, a charging subsystem for charging the EV, and a master event processor. The HMI, the payment subsystem and the charging subsystem are adapted for issuing event data to the master event processor.

The policy configurator is adapted for configuring a policy set and for sending the policy set to the master event processor. The master event processor is adapted for receiving the event data from the HMI, and the payment subsystem, and in response to the received event data, controlling operation of the HMI, and of the payment subsystem according to a workflow based on the policy set.

The event data include at least one non-critical anomaly event, and the workflow specifies a respective action for enabling a charging operation in response to the at least one non-critical anomaly event.

According to an aspect, a method for charging an EV by an EVSE is provided. The method includes the steps of
- configuring a policy set;
- sending the policy set to a master event processor of the EVSE;
- receiving, by the master event processor, event data from an HMI, and a payment subsystem, of the EVSE;
- controlling, in response to the received event data, operation of the HMI, and of the payment subsystem, according to a workflow based on the policy set.

The event data include at least one non-critical anomaly event, and the workflow specifies a respective action for enabling a charging operation in response to the at least one non-critical anomaly event.

The above-defined method may be carried out by any configuration of the EVSE described above.

According to an aspect, the method may include receiving, by the master event processor, event data indicative of an EV being connected to the EVSE for charging the EV by the EVSE. The event data may be indicative of a user's intention to charge the EV by the EVSE.

Aspects of the invention allow for an improved electric vehicle charging infrastructure allowing adaptable workflows. In particular, by executing overall control according to a workflow based on the policy set and taking account events from various relevant sources, a highly coordinated charging action is enabled which allows successful charging operation even in the face of minor errors or inconsistencies. Such errors and inconsistencies may include incomplete authorization, inconsistencies of backend messaging, uncritical charger errors, uncritical protocol errors, human user errors, and/or payment errors. By providing an overall workflow controlled by the master event processor as well as a flexibly configurable policy set guiding this workflow, it is made possible to handle such errors and inconsistencies gracefully for ensuring a successful overall charging operation. Further, a highly flexible adaptation of the policy set is made possible, which allows adapting the policy set in response to new circumstances or new experiences.

Thus, aspects of the present invention enable flexible, and possibly automated, adjustment of policies based on field operational data (e.g., event logs). Compared to regular software or firmware updates that require strict testing release cycle management, aspects of the invention allow a more flexible and adaptive updating. Thereby, it is possible to perform instant deployment, fast iterations, tests, selective deployment, and experimentation. In contrast, full software or firmware updates, which cannot be carried out with the same level of flexibility and confidence as the updating or configuration of policy sets only (which does not require an overall software update).

According to an aspect, the policy set relates to non-critical events and/or operations, and in particular relate to events and/or operations relating to interaction with the user and/or the environment (not purely relating to control of the charging subsystem). Accordingly, the workflow based on the policy set may be non-critical. For non-critical events, operations and/or workflows, even if errors occur and are improperly handled, this may result in unwanted outcomes, but not in safety-critical states of the EVSE. For example, errors in non-critical workflows may result in charging being unintentionally aborted or an unprocessed payment.

Further advantages, features, aspects and details that can be combined with embodiments described herein are evident from the dependent claims, the description and the drawings.

### BRIEF DESCRIPTION OF THE FIGURES

The details will be described in the following with reference to the figures, wherein
- Fig. 1: is a schematic circuit diagram of an electric vehicle charging infrastructure according to an embodiment;
- Fig. 2a: is a schematic diagram of an electric vehicle charging infrastructure according to an embodiment;
- Fig. 2b: is a schematic diagram of an electric vehicle charging infrastructure according to an embodiment showing additional details compared to Fig. 2a;
- Fig. 2c: is a schematic diagram of an electric vehicle charging infrastructure according to an embodiment; and
- Fig. 3: is a schematic diagram of a method for charging an EV.

### DETAILED DESCRIPTION OF THE FIGURES AND OF EMBODIMENTS

In the following, embodiments are set forth to describe specific examples presented herein. The person skilled in the art will recognize that one or more other examples and/ or variations of these examples may be practiced without all the specific details outlined below. Also, well known features may not be described in detail so as not to obscure the description of the examples herein. For the ease of illustration, like reference numerals are used in different figures to refer to the same elements or additional instances of the same element. Features illustrated or described as part of one embodiment can be used on or in conjugation with any other embodiment to yield yet a further embodiment. The figures represent schematic diagrams and do not necessarily represent dimensions or measurements of real embodiments and/ or are not necessarily drawn to scale.

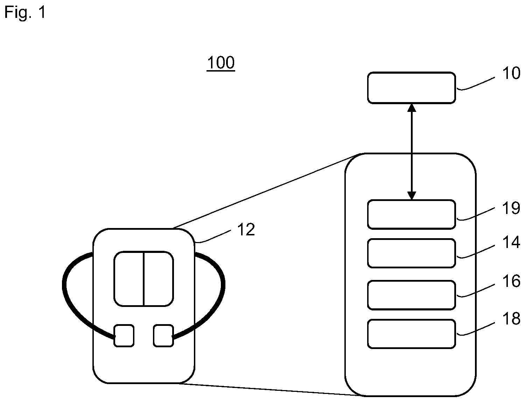

Referring now to the drawings, Fig. 1 presents a schematic circuit diagram of an electric vehicle charging infrastructure 100 according to an embodiment. The electric vehicle charging infrastructure 100 includes a policy configurator 10 and an electric vehicle supply equipment (EVSE) 12 for charging an electric vehicle (EV). The EVSE 12 includes a human-machine interface (HMI) 14 for interacting with a user, a payment subsystem 16 for processing payments, a charging subsystem 18 for charging the EV, and a master event processor 19.

The policy configurator 10 may be integrated in the EVSE 12 or provided as a separate unit remote from the EVSE 12. The policy configurator 10 may communicate with the master event processor 19, possibly over a network.

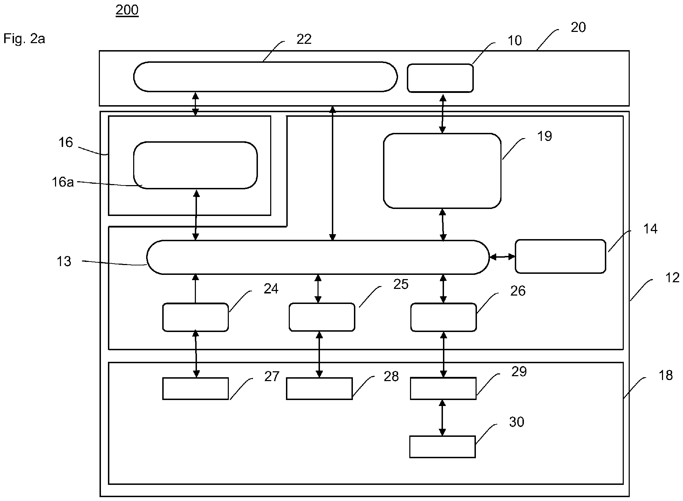

Fig. 2a is a further schematic diagram of the electric vehicle charging infrastructure 200, which may be the same as infrastructure 100 described in connection with Fig. 1. The electric vehicle charging infrastructure 200 includes the components described with reference to Fig. 1, in particular the EVSE 12 and the policy configurator 10. The EVSE includes the HMI 14, the payment subsystem 16, the charging subsystem 18, and the master event processor 19 as already shown in Fig. 1.

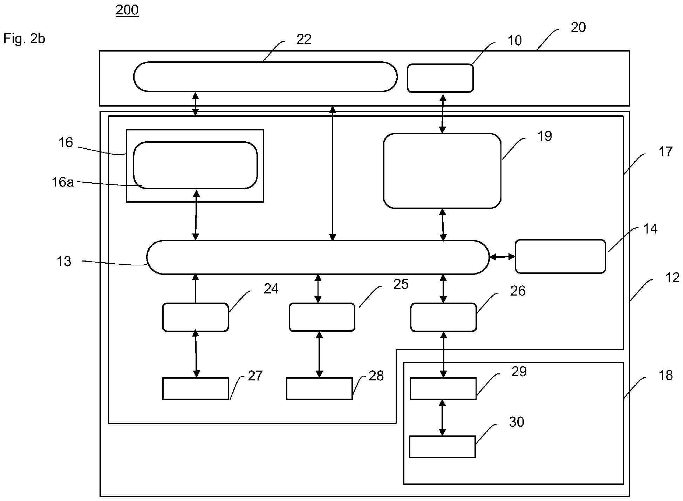

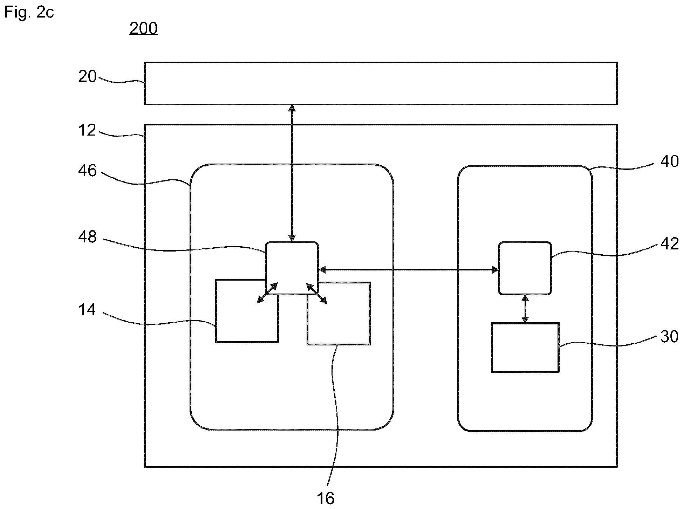

The master event processor 19, the payment subsystem 16 and the charging subsystem 18 may be coupled to each other by an event bus 13. The HMI 14 may also be coupled to the event bus, either as a separate unit as shown in Figs. 1 and 2, or jointly with the HMI 14 as an integrated HMI event master unit encompassing the HMI 14 and the master event processor 19. In this case, the integrated HMI event master unit may be coupled to the event bus by a common interface, whereas the HMI and the master event processor 19 may communicate directly with each other.

The payment subsystem 16 and the charging subsystem 18 may be provided as separate modules from the master event processor 19 (or from the HMI event master unit) and may be communicatively coupled to the master event processor 19 via an event bus 13. The event bus 13 acts like a broker forwarding events from one entity to another. It may be directly connected to the charging subsystem 18, or, as depicted in Fig. 2a connected via respective agents 24, 25, and 26. The agents 24, 25, and 26 may interface with physical entities of the charging subsystem 18.

Such physical entities may include, for instance, a RFID reader 27, LEDs, LED strips, buttons, gun holder sensors, all referenced to with numeral 28, and power electronics, batteries and/or a charging station controller, all referenced to with numerals 29 and 30.

In the embodiment of Fig. 2a, the electric vehicle charging infrastructure 200 further includes a cloud backend 20, and the policy configurator 10 belongs to the cloud backend 20. The cloud backend may be based on the OCPP protocol. Although in Fig. 2a the policy configurator 10 is hosted by the cloud backend 20, it may also be provided in any other manner.

The cloud backend may integrate other functionalities as well. For example, as shown in Fig. 2a, the cloud backend 20 may be a charge point operator cloud backend. The charge point operator cloud backend 20 may also provide for a cloud-based payment backend 22. The cloud-based payment backend 22 communicates with the EVSE's payment subsystem 16, e.g., directly (i.e., bypassing the event bus 13) and/or via the event bus 13. The payment subsystem 16 may include a payment HMI 16a. The payment HMI 16a may provide for user interaction for self-service payment.

The cloud backend 20 (specifically the cloud-based payment backend 22 and/or the policy configurator 10) may be communicatively coupled to the event bus 13.

The policy configurator 10 is communicatively coupled to the master event processor 19, e.g., for receiving event data, specifically log data. The charge point operator cloud backend 20 and other components of the EVSE (such as the HMI 14, the payment subsystem 16, the charging subsystem 18 the master event processor 19, and/or and integrated HMI event master unit) may communicate though the event bus 13, e.g., using a Transport Layer Security (TLS) protocol.

Fig. 2b shows an embodiment having the elements of Fig. 2a, and the above description of Fig. 2a also applies to Fig. 2b.

In addition, Fig. 2b illustrates that the EVSE 12 comprises a power domain and an experience domain. The power domain is the charging subsystem 18 for charging the EV. The charging subsystem 18 includes power electronics and other power components, collectively labelled with the reference sign 30, for supplying the electric power to the EV, and a charging station controller 29 for controlling the power electronics and the other components.

The experience domain 17 comprises the HMI 14 and the payment subsystem 16. The experience domain 17 further comprises the master event processor 19 controlling the experience domain according to the workflows defined by the active policy set. Thereby, the experience domain 17 implements the user interaction. This may also include high-level communication with the power domain 18, but not low-level details regarding the operation of the power electronics, which are implemented by the charging station controller (power domain controller) 29 within the power domain.

The master event processor and/or the policy sets and workflows of the present invention belong to the experience domain 17 and not to any lower-level control scheme within the power domain 18.

Next, an example of an update in policy set is described. For example, before updating, the workflow required that the EV is first connected to the EVSE and then the payment process is initiated. However, it turns out that in some scenarios the users ignore these instructions and attempt to pay before plugging the EV into the EVSE, which is not supported by the existing workflow and results in a degraded experience.

According to an embodiment, the policy configurator may configure a policy set supporting payment before the EV is first connected to the EVSE. This may be done using a semantic analysis of the user log data and payment log data, and/or using an operator input. The policy configurator then sends the policy set to the master event processor and allows immediate implementation of the updated policy set resulting in an enhanced user experience. In embodiments, this does not require any update of software (in particular, no firmware update is needed, not even an OTA update of any software components); instead, just a change in parameters guiding the behavior of the existing software. In other embodiments, this is possible, for example, by a fast OTA-update procedure of individual software components but without the need of a full firmware update. This is possible in a seamless and swift manner, also because the workflow is related to a non-critical or not safety-relevant part of the EVSE operation. Therefore, additional safety requirements which would be necessary for a full firmware update including more safety-relevant parts can be simplified or omitted.

Fig. 2c shows an embodiment of an electric vehicle charging infrastructure 200 having at least some of the elements of Figs. 2a and 2b, for which the above description of Figs. 2a and 2b also applies. The embodiment of Fig. 2c may include additional features described in connection with Figs. 2a and 2b, such as agents 24, 25, 26 or additional features of the cloud backend 20.

Fig. 2c shows an electric vehicle charging infrastructure 200 with an EVSE 12. The EVSE 12 includes a power domain 40. The power domain 40 includes power electronics and other power components (collectively labelled with the reference sign 30) for providing power to charge one or more EVs. The power domain 40 further includes a power domain module 42 with a power domain controller, which is described in Figs. 2a and 2b as a charging station controller 29. In particular, the power domain controller is configured for controlling the power electronics and the other power components.

In Fig. 2c, the EVSE 12 includes an experience domain 46. The experience domain 46 has an experience domain module 48 with an experience domain controller. In the embodiment of Fig. 2c, the experience domain controller of the experience domain module 48 may provide the processing functions of a master event processor, of an HMI 14 and/or of the payment subsystem 16. The experience domain controller may control the power domain controller in accordance with embodiments described herein. The experience domain controller may be connected to a cloud backend 20 as described herein. A policy configurator may be implemented in the cloud backend 20 or in the experience domain controller. In Fig. 2c, the experience domain module 48 and the power domain module 42 are independently exchangeable modules of the EVSE 12. In particular, the experience domain controller and the power domain controller are provided as separately exchangeable hardware. The experience domain controller can have a high processing capability for user interaction and efficient data processing. The power domain controller may be configured for reliable and safe operation of the charging subsystem of the EVSE 12. The modular configuration of the power domain module 42 and the experience domain module 48 with separate controllers can improve, for example, an adaptability and/or a serviceability of the EVSE 12, while particularly ensuring a safe and reliable operation of the charging subsystem of the EVSE 12.

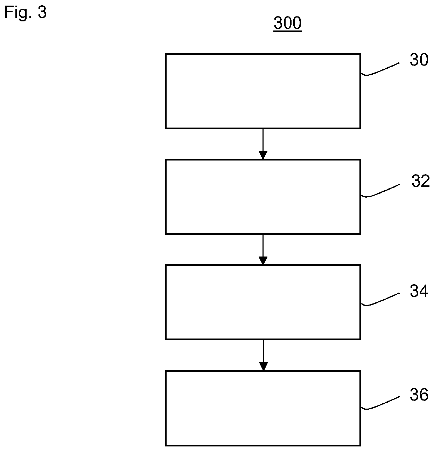

Fig. 3 schematically illustrates a method 300 for charging an EV by an EVSE. The method 300 includes the steps of configuring 30 a policy set; sending 34 the policy set to a master event processor of the EVSE; receiving 34, by the master event processor, event data from an HMI, a payment subsystem, and a charging subsystem of the EVSE; controlling 36, in response to the received event data, operation of the HMI, of the payment subsystem, and of the charging subsystem according to a workflow based on the policy set. The method may be carried out by any configuration of the charging infrastructure described herein. Further details regarding the EV charging infrastructure and its operation are described in the following.

### DISCUSSION OF FUTHER DETAILS, POSSIBLE VARIANTS AND COMMON ASPECTS

Next, general optional aspects of the invention are further described. Here, unless excluded, any aspect may be combined with any other aspect described herein and may apply to any of the previously described embodiments of the invention described herein, without being limited to such embodiment.

According to an aspect, the policy configurator of the electric vehicle charging infrastructure may be adapted for receiving user input log data from the HMI, receiving payment log data from the payment subsystem, receiving charging log data from the charging subsystem, and for configuring the policy set based on the received user input log data, payment log data, and charging log data. Thereby, particularly responsive adaptation of the policy set in response to the received log data, and thereby a fast feedback loop for updating the policy set in response to new circumstances or experiences is enabled.

The input log data, the payment log data, and the charging log data may be based on respective event data from the HMI, the payment subsystem, and the charging subsystem. Thereby, the policy configurator is adapted for configuring the policy set based on the respective event data from the HMI, the payment subsystem, and the charging subsystem.

According to an aspect, the input log data and/or the payment log data, and/or the charging log data may be provided to the EVSE and thus to the policy configurator by tokens. Thereby, an effective communication of the log data is enabled. The HMI, the payment subsystem, the charging subsystem, and the event processor may, for example, communicate using a Message Queuing Telemetry Transport (MQTT) protocol.

According to an aspect, the policy configurator of the electric vehicle charging infrastructure may be adapted for configuring the policy set based on event data, in particular wherein the policy configurator is configured for configuring the policy set using machine learning methods. The machine learning methods may make use of supervised algorithms or unsupervised algorithms or a combination thereof. Thereby, a particularly responsive adaptation to new circumstances and a fast and efficient feedback loop for improving operation of the EVSE may be enabled.

According to an aspect, the policy set may define the workflow by specifying, for predefined events, respective actions to be triggered in response to the predefined events. The actions may include one or more of updating a status variable, sending a command to at least one of the HMI, the payment subsystem, and the charging subsystem; updating a charging parameter; simulating a user input to the HMI; simulating an EV input to the charging subsystem; overriding a warning message; updating Human Machine Interface elements such as elements displayed on the HMI display and possible input options.

The policy set may include defining at least one non-critical anomaly event, the workflow may specify a respective action for enabling (e.g., continuing) a charging operation in response to the at least one non-critical anomaly event. The at least one non-critical anomaly event may indicate at least one of: an incomplete authorization; a messaging inconsistency; a charger error; an electric vehicle protocol error; and/or a payment error.

The charging operation may be enabled in a reduced manner, e.g., with a reduced power such as minimal charging. This may allow keeping a charging operation at least nominally running with limited (minimal) power consumption. Thereby, is becomes possible to continue the charging process even in case of an anomaly event, e.g., if a warning message is issued, without compromising safety and reliability.

Thereby, possible non-optimal workflow paths (unsuccessful or non-optimal charging operation in spite of an intent to charge and the objective possibility to charge) can be avoided that may otherwise arise during the operation of a charger. Potential causes for such non-optimal workflow paths can be dynamic in nature, and are very difficult to predict and observe in a lab environment.

Examples of noncritical anomaly events include an incomplete (pending) authorization and/or minor authorization errors or warnings; inconsistencies of the backend (e.g., OCPP Backend) messaging; charger errors; vehicle protocol errors; user (human) errors; and/or payment errors. By recognizing such anomaly events as uncritical, the master event processor may address these issues (e.g., by overriding or working around them, or by allowing a reduced operation, e.g., with minimal charging power and/or other limitations), and thereby ensure a graceful handling of the anomaly and a successful outcome of the charging operation.

For instance, once a charging subsystem of an electric vehicle charging infrastructure is connected to an electric vehicle, a user authorization within a predetermined time period may be expected. If the user fails to authorize within this time period, the EV and/or the EVSE may cancel the charging attempt due to an incomplete authorization despite the user's attempt to charge the vehicle. The policy configurator may configure the policy set such that the user's intent (charging) is recognized and the EVSE is enabled to charge the vehicle.

The policy configurator may be configured for configuring the policy set to include decision alternatives, and wherein the event processor may be configured for implementing the decision alternatives within the workflow. The event processor may be configured to approximate an event to match one of the decision alternatives of the policy set thereby implementing the workflow. Approximating an event may comprise recognizing an intent from any component of the EVSE and/or a user based on the received events.

The policy set may further include defining at least one critical anomaly event, the workflow may specify a respective action for disabling (e.g., abandoning) a charging operation in response to the critical anomaly event. By a differentiation between uncritical and critical anomaly events, and by defining different reactions to both, safe operation is made possible.

Next, further detailed aspects relating to the system architecture are described.

According to an aspect, the master event processor and the HMI may be provided as an integrated module, e.g., jointly coupled to an event bus via a joint interface. The invention is not limited thereto, and the master event processor and the HMI may alternatively be provided as separate modules within the EVSE. Still, providing the master event processor and the HMI as an integrated module can be advantageous, since the interaction between master event processor and HMI is particularly close. Specifically, the HMI may receive a user input indicative of a user's intent, and the master event processor may be enabled to establish a workflow that considers the user's intent. The workflow may also include simulating a user input and/or correcting a user input in order to remove inconsistencies or roadblocks to the workflow. Due to these close interactions, providing the master event processor and the HMI may be as an integrated module can be advantageous.

According to an aspect, within the electric vehicle charging infrastructure, the payment subsystem and the charging subsystem may be provided as separate modules from the master event processor and may be coupled to the master event processor via an event bus.

In addition to the (primary) HMI described so far and further below, the payment subsystem may include a payment HMI (second HMI). The payment HMI may provide for self-service payment. The payment HMI may provide for payments, resource bookings as for instance reserving the EVSE for a later point in time, and/or redemption of digital charging vouchers. The payment HMI may be provided separately from the primary HMI.

According to an aspect, the policy configurator may be located remotely from the EVSE and may be connected to the master event processor over a data network, in particular wherein the policy configurator may be hosted in a cloud. According to an aspect, the policy configurator may be integrated with a Charge Point Operator Backend. According to an aspect, the Backend may be a cloud backend, in particular a cloud backend based the Open Charge Point Protocol (OCPP).

Generally, the cloud may include the electric vehicle charging infrastructure's backend. The electric vehicle charging infrastructure's backend may be a charge point operator cloud backend and/or based on the Open Charge Point Protocol (OCPP).

According to an aspect, the policy set relates to non-critical events and/or operations. Accordingly, the workflow based on the policy set may be non-critical. For non-critical events, operations and/or workflows, even if errors occur and are improperly handled, this may result in unwanted outcomes, but not in safety-critical states of the EVSE. For example, errors in non-critical workflows may result in charging being unintentionally aborted or an unprocessed payment.

In contrast, safety-critical events or operations or workflows - not belonging to the above aspect - relate to safety-relevant charging behavior of the EVSE, and errors in these may result in safety-critical electrical states such as an overcurrent, an overvoltage, EV battery damage or other state in which safety-critical electrical parameters exceed a safety limit.

In a particular aspect, the policy set relates to interaction with a user and/or with the environment. In this aspect, the events, operations and/or workflows may relate to user interaction, such as any one or more elements selected from: payment, user input, user output, sending a user request for initiating the charging process to the charging subsystem, sending a user request for aborting the charging process to the charging subsystem.

According to an aspect, the policy configurator is adapted for receiving and configuring the policy set based on log data relating to non-critical events and operations, in particular to user interaction, payment and/or other interaction with the environment. The log data may, in particular, include user input log data, e.g., from the HMI. Additionally, or alternatively, the log data may include payment log data, e.g., from the payment subsystem. Optionally, the log data may further include charging log data, e.g., from the charging subsystem, as outlined below. The policy configurator may be adapted for configuring the policy set based on the received log data (e.g., user input log data and/or payment log data and optionally charging log data).

In addition, the log data may also include charging log data from the charging subsystem, such as data indicating an outcome of the charging process. The policy configurator may be adapted for configuring the policy set also based on the received charging log data. However, the policy preferably relates to a non-critical workflow as described above, and not to any safety-critical aspects of the charging process.

According to an aspect, the policy configurator may be adapted for configuring the policy set based on the received log data (e.g., user input log data, payment log data, and/or charging log data). For this purpose, the policy configurator may include a semantic engine adapted for performing a semantic interpretation of the user interaction based on the received log data, and in particular for performing a semantic interpretation of user interactions leading to a non-successful charging operation, based on the received log data. The semantic engine may be adapted for outputting a policy change proposal based on the semantic analysis, in particular based on the semantic analysis of the log data from a plurality of charging processes. Thereby, actionable output is obtained and the policy set may be improved or adapted from the semantic interpretation of the log data from the EV.

According to an aspect, a large number of log data including at least one and preferably more than one of log data types such as user input log data / user interaction data, payment log data, charging log data, environmental log data is received and (semantically) analyzed by the policy configurator. This allows seeing and analyzing a charging scene in context, and thus adapting the policy set for improving the user experience.

According to an aspect, the generated or updated policy set relates to a workflow (exclusively) triggered by non-critical events. The events include at least one non-critical anomaly event, the workflow specifying a respective action for enabling a charging operation in response to the at least one non-critical anomaly event. This is different from a safety-critical context involving a critical anomaly event. In such a safety-critical context, a workflow may specify an action for disabling a charging operation in response to the critical anomaly event. In an aspect, the policy set is updated only for workflows triggered by non-critical events but not by critical events. By differentiating between critical and non-critical anomaly events, and by addressing non-critical anomaly events in the described manner, it becomes possible to increase the success rate of charging operations and thereby user satisfaction, without compromising safety.

According to an aspect, the EVSE comprises a power domain and an experience domain. The power domain comprises the charging subsystem for charging the EV. The charging subsystem includes power electronics and other power components for supplying the electric power to the EV, and a charging station controller for controlling the power electronics and the other components.

The experience domain comprises the HMI and the payment subsystem. The experience domain may further comprise the master event processor being adapted for controlling the experience domain according to the workflows defined by the active policy set. Thereby, the experience domain implements the user interaction. This may also include high-level communication with the power domain such as issuing a target power, a charging authorization command, a charging abort command, receiving status information such as power delivery status, battery status, and current power delivery (wattage), but not low-level details regarding the operation of the power electronics, which belong to the power domain implementing the electric power delivery to the EV.

The experience domain and the power domain may run on separate parts of the EVSE, and may have separate controllers. These separate controllers may be implemented on different hardware or in different virtual environments of a common hardware.

According to an aspect, the master event processor and/or the policy sets and workflows of the present invention belong to the experience domain and not to the power domain.

According to an aspect, an electric vehicle charging infrastructure is provided. The electric vehicle charging infrastructure includes an electric vehicle supply equipment (EVSE) for charging an electric vehicle. The EVSE includes power electronics for providing a charging power for charging one or more electric vehicles. The power electronics may be part of a power domain described herein, particularly of a charging subsystem. For example, the power electronics may include one or more power converters for converting power from a power source, such as a power grid, to a suitable format for charging the electric vehicle. The EVSE includes a power domain module including a power domain controller. The power domain controller may be configured for controlling the power domain of an EVSE, particularly for controlling the delivering of power from the power electronics to the one or more electric vehicles. The EVSE further includes an experience domain module including an experience domain controller. The experience domain controller may be configured for controlling an interaction between the EVSE and a user of the EVSE. In particular, the experience domain controller may be configured for controlling the interaction with a user via an HMI and/or via a payment subsystem, for example via an HMI and/or a payment subsystem according to embodiments described herein.

The experience domain controller may be an integrated controller providing a processing function of a master event processor, of an HMI, of a payment subsystem and/or of a policy configurator according to embodiments described herein. The experience domain controller and the power domain controller comprise respective communication interfaces for communicating with each other and for exchanging commands and status data. In particular, the experience domain controller may be further configured for sending high-level control commands to the power domain controller for initiating, ending and/or influencing the charging of an EV, particularly based on the interaction with the user and/or based on received event data. Furthermore, the power domain controller may be further configured for sending status information to the experience domain controller, the status information being indicative of a high-level charging status such as charging rate and charging percentage, and/or of high-level events such as warnings or fault messages.

The experience domain controller may be configured for receiving and/or storing log data and/or event data of various subsystems of the EVSE, such as of the HMI, of the payment subsystem and/or of the charging subsystem. Further, the experience domain controller may be configured for processing and/or transmitting the log data and/or the event data. For instance, the log data and/or the event data may be transmitted to a remote location, such as a cloud backend, for remote processing according to embodiments described herein.

The power domain module and the experience domain module are different modules of the EVSE. The power domain module and the experience domain module may be independently exchangeable modules of the EVSE. The power domain controller and the experience domain controller may be physically separate controllers, particularly provided as separate hardware, more particularly provided on different printed circuit boards (PCBs). Each of the power domain controller and the experience domain controller may include one or more processors and memory. The memory may store instructions to execute operations according to embodiments described herein. Further, the memory may store log data and/or event data.

Providing the power domain controller and the experience domain controller in separate modules of the EVSE may provide, for example, one or more of the following advantages. The experience domain module, particularly in the experience domain controller, may be provided with a high processing capability. The experience domain controller may be exchanged over time, for instance to adapt the experience domain in view of developments in the fast-evolving field of EV charging, for instance in view of developments in data processing or in user interaction. Further, hardware with a high processing capability, or the software running on such hardware, may have a more limited operating life than other components of the EVSE, such that it may be advantageous to enable a replacement of the experience domain controller without affecting other parts of the EVSE, particularly without affecting the charging subsystem. The power domain module, particularly the power domain controller, may be configured for providing safety-critical and/or safety-certified functions. The power domain module may be configured to provide a safe and/or reliable operation of the charging subsystem. An EVSE may therefore include a reliable and safe power domain module with a corresponding power domain controller for safety-critical functions related to the charging subsystem and, separately, an experience domain module with a corresponding experience domain controller with high processing capability for data processing and an adaptable user experience. In some embodiments, the power domain controller and the experience domain controller may be exactly two controllers, particularly exactly two separately or independently exchangeable controllers. Such a configuration of exactly two controllers may provide a low number of controllers in the EVSE, and, at the same time, separate controllers may be provided for safety-critical power control and for more processing-intensive operations related to the user experience.

Further aspects of the present disclosure, which may be combined with other aspects disclosed herein, are described in the following implementations:
Implementation 1. An electric vehicle charging infrastructure, comprising
   - an electric vehicle supply equipment, EVSE, for charging an electric vehicle, EV; and
   - a policy configurator,
   the EVSE comprising:
   - a human-machine interface, HMI, for interacting with a user,
   - a payment subsystem for processing payments,
   - a charging subsystem for charging the EV, and
   - a master event processor,

   each of the HMI, the payment subsystem and the charging subsystem being adapted for issuing respective event data to the master event processor,
   the policy configurator being adapted for configuring a policy set and for sending the policy set to the master event processor,
   the master event processor being adapted for
      - receiving the event data from the HMI, the payment subsystem, and the charging subsystem; and
      - in response to the received event data, controlling operation of the HMI, of the payment subsystem, and of the charging subsystem according to a workflow based on the policy set.
Implementation 2. The electric vehicle charging infrastructure of implementation 1,
   wherein the policy configurator is adapted for
   receiving user input log data from the HMI,
   receiving payment log data from the payment subsystem,
   receiving charging log data from the charging subsystem, and for configuring the policy set based on the received user input log data, payment log data, and charging log data.
Implementation 3. The electric vehicle charging infrastructure of implementation 2, wherein the input log data, the payment log data, and the charging log data are based on respective event data from the HMI, the payment subsystem, and the charging subsystem.
Implementation 4. The electric vehicle charging infrastructure of any of the previous implementations, wherein the policy configurator is configured for configuring the policy set based on event data, in particular wherein the policy configurator is configured for configuring the policy set using a machine learning method.
Implementation 5. The electric vehicle charging infrastructure of any of the previous implementations, wherein the policy set defines the workflow by specifying, for predefined events, respective actions to be triggered in response to the predefined events.
Implementation 6. The electric vehicle charging infrastructure of any of the previous implementations, wherein the policy set includes
   - Defining at least one non-critical anomaly event, the workflow specifying a respective action for enabling a charging operation in response to the at least one non-critical anomaly event;
   - Defining at least one critical anomaly event, the workflow specifying a respective action for disabling a charging operation in response to the critical anomaly event.
Implementation 7. The electric vehicle charging infrastructure of implementation 6, wherein the at least one uncritical anomaly event indicates at least one of:
   - an incomplete authorization;
   - a messaging inconsistency;
   - a charger error;
   - a Vehicle protocol error; and/or
   - a payment error.
Implementation 8. The electric vehicle charging infrastructure of any of the previous implementations, wherein the master event processor and the HMI are provided as an integrated module.
Implementation 9. The electric vehicle charging infrastructure of any of the previous implementations, wherein the payment subsystem and the charging subsystem are provided as separate modules from the master event processor and coupled to the master event processor via an event bus.
Implementation 10. The electric vehicle charging infrastructure of any of the previous implementations, wherein the policy configurator is located remotely from the EVSE and connected to the master event processor over a data network, in particular wherein the policy configurator is hosted in a cloud.
Implementation 11. A method for charging an electric vehicle, EV, by an electric vehicle supply equipment, EVSE, comprising:
   - configuring a policy set;
   - sending the policy set to a master event processor of the EVSE;
   - receiving, by the master event processor, event data from an HMI, a payment subsystem, and a charging subsystem of the EVSE;
   - controlling, in response to the received event data, operation of the HMI, of the payment subsystem, and of the charging subsystem according to a workflow based on the policy set.
Implementation 12. The method of implementation 11, being carried out by the EVSE of any of the implementations 1 to 10.

## Claims

1. An electric vehicle charging infrastructure (100), comprising
- an electric vehicle supply equipment, EVSE, (12) for charging an electric vehicle, EV; and
- a policy configurator (10),
the EVSE comprising:
- a human-machine interface, HMI, (14) for interacting with a user,
- a payment subsystem (16) for processing payments,
- a charging subsystem (18) for charging the EV, and
- a master event processor (19),
each of the HMI, the payment subsystem and the charging subsystem being adapted for issuing respective event data to the master event processor,
the policy configurator being adapted for configuring a policy set and for sending the policy set to the master event processor (19),
the master event processor (19) being adapted for
- receiving the event data from the HMI (14) and the payment subsystem (16); and
- in response to the received event data, controlling operation of the HMI (14), and of the payment subsystem (16) according to a workflow based on the policy set, wherein
the event data include at least one non-critical anomaly event, and the workflow specifies a respective action for enabling a charging operation in response to the at least one non-critical anomaly event.

2. The electric vehicle charging infrastructure of claim 1, wherein the master event processor (19) is adapted for
- receiving the event data from the HMI (14), the payment subsystem (16), and the charging subsystem (18);
- in response to the received event data, controlling operation of the HMI (14), of the payment subsystem (16), and of the charging subsystem (18) according to the workflow based on the policy set.

3. The electric vehicle charging infrastructure of claim 1 or 2, wherein the policy configurator is configured for configuring the policy set based on event data, in particular wherein the policy configurator is configured for configuring the policy set using a machine learning method.

4. The electric vehicle charging infrastructure of any of the previous claims, wherein the policy configurator includes a semantic engine adapted for performing a semantic interpretation of the user interaction based on the received log data.

5. The electric vehicle charging infrastructure of any of the previous claims, wherein the policy set defines the workflow by specifying, for predefined events, respective actions to be triggered in response to the predefined events.

6. The electric vehicle charging infrastructure of any one of the preceding claims, wherein the at least one non-critical anomaly event indicates at least one of:
- an incomplete authorization;
- a messaging inconsistency;
- a charger error;
- a Vehicle protocol error; and/or
- a payment error.

7. The electric vehicle charging infrastructure of any one of the preceding claims,
wherein the one non-critical anomaly event is a user-interaction anomaly, in particular includes at least one of a user input anomaly and a payment anomaly.

8. The electric vehicle charging infrastructure of any one of the preceding claims, wherein the workflow specifies a reduced-power charging operation in response to the at least one non-critical anomaly event.

9. The electric vehicle charging infrastructure of any of the previous claims, wherein the master event processor and the HMI are provided as an integrated module (17), particularly wherein the integrated module is separate from a charging subsystem (18) for charging the EV.

10. The electric vehicle charging infrastructure of any of the previous claims, wherein the payment subsystem and the charging subsystem are provided as separate modules from the master event processor and coupled to the master event processor via an event bus.

11. The electric vehicle charging infrastructure of any of the previous claims, wherein the EVSE comprises a power domain and an experience domain, and wherein the master event processor (19), the HMI, and the payment subsystem belong to the experience domain, and wherein the policy set relates to operation of the experience domain, and wherein the charging subsystem (18) belongs to the power domain.

12. The electric vehicle charging infrastructure of any of the previous claims, wherein the policy configurator is located remotely from the EVSE and connected to the master event processor over a data network, in particular wherein the policy configurator is hosted in a cloud.

13. A method for charging an electric vehicle, EV, by an electric vehicle supply equipment, EVSE, the method particularly being carried out by the EVSE of any of claims 1 to 12, comprising:
- configuring a policy set;
- sending the policy set to a master event processor of the EVSE;
- receiving, by the master event processor, event data from an HMI, and a payment subsystem of the EVSE;
- controlling, in response to the received event data, operation of the HMI, and of the payment subsystem according to a workflow based on the policy set, whereby
the event data include at least one non-critical anomaly event, and the workflow specifies a respective action for enabling a charging operation in response to the at least one non-critical anomaly event.

14. The method of claim 13, wherein the method further includes the following operations, or the electric vehicle charging infrastructure of any of claims 1 to 12, wherein the policy configurator is adapted for:
receiving at least one user-interaction log data selected from
user input log data from the HMI, and
payment log data from the payment subsystem,
optionally for further receiving charging log data from the charging subsystem, and
configuring the policy set based on the received user-interaction log data, and optionally further based on the received charging log data;
particularly wherein the input log data, the payment log data, and optionally the charging log data are based on respective event data from the HMI, the payment subsystem, and optionally the charging subsystem.

15. The method of claim 13 or 14, wherein the method further includes the following operations, or the electric vehicle charging infrastructure of any of claims 1 to 12, wherein the policy set includes:
- Defining at least one non-critical anomaly event, the workflow specifying a respective action for enabling a charging operation in response to the at least one non-critical anomaly event;
- Defining at least one critical anomaly event, the workflow specifying a respective action for disabling a charging operation in response to the critical anomaly event.
